# EUROPÄISCHE PATENTSCHRIFT

(11) **EP 2 424 761 B1**
(45) Veröffentlichungstag und Bekanntmachung des Hinweises auf die Patenterteilung: **28.10.2015**
(21) Anmeldenummer: 11720010.5
(22) Anmeldetag: 01.03.2011
(51) Int. Cl.: B62B 1/18, B62B 1/20

(54) **SCHUBKARRE**
WHEELBARROW
BROUETTE

(30) Priorität: 01.03.2010 DE 102010009771
(43) Veröffentlichungstag der Anmeldung: 07.03.2012
(73) Patentinhaber: Westphal, Friedrich, 79361 Sasbach (DE)
(72) Erfinder: Westphal, Friedrich, 79361 Sasbach (DE)
(74) Vertreter: Geitz Truckenmüller Lucht
(86) Internationale Anmeldenummer: PCT/DE2011/000199
(87) Internationale Veröffentlichungsnummer: WO 2011/107073

(56) Entgegenhaltungen:
- GB-A- 810 467
- GB-A- 2 038 723
- GB-A- 2 282 098
- US-A- 3 404 427
- US-A1- 2005 275 176

## Beschreibung

Die Erfindung geht aus von einer Schubkarre mit einem Gestell mit mindestens einem Rad und mit einer Lastenaufnahmeeinrichtung zur Aufnahme von Lasten.

Bekannte Schubkarren weisen ein Gestell auf, an welchem ein Rad und eine Aufnahme für Lasten angeordnet sind. Bei der Lastenaufnahmeeinrichtung handelt es sich meist um einen wannenförmigen Behälter oder ein sonstiges Hohlgefäß. Das Gestell ist mit zwei Stützen ausgestattet, mit denen sich die Schubkarre in der Ruhestellung zusammen mit dem Rad auf einem Untergrund abstützt. Ferner weist das Gestell zwei Griffstangen auf, um die Stützen der Schubkarre mit zwei Händen vom Boden abheben zu können und von der Ruhestellung in die Fahrstellung überzugehen. In der Fahrstellung berührt lediglich das Rad den Untergrund. Durch die Form der Lastenaufnahme wird die Position des Schwerpunkts bei beladener Schubkarre beeinflusst. Dieser befindet sich bevorzugt nahe des Rades, so dass zum Anheben der Stützen nur ein kleines Drehmoment aufgebracht werden muss.

Bei bekannten Schubkarren besteht das Gestell üblicherweise aus einem Rohr, das in eine für das Gestell notwendige Form gebracht ist. Meist ist das Rohr aus Metall gefertigt. Es wird gebogen, um die Form mit den Griffstangen, den Stützen und der Radaufhängung aufzuweisen. Als nachteilig erweist sich, dass das Metallrohr nicht an die verschiedenen Anforderungen hinsichtlich der Stabilität in den unterschiedlichen Bereichen des Gestells angepasst ist. Ferner weist das Gestell ein hohes Gewicht auf und ist in der Herstellung aufwändig.

Aus der US 3,404,427 A ist eine Schubkarre gemäß dem Oberbegriff von Anspruch 1 bekannt, bei der die Griffstangen durch aufsteckbare Griffteile verlängert werden können. Die Griffteile weisen einen Hohlkörper auf, der mittels einer Befestigungseinrichtung an den Griffstangen fixiert werden kann.

Die US 2005/275176 A1 offenbart eine Schubkarre mit einem Rahmen aus einem rohrförmigen Hohlkörper, mit einer Wanne und mit einem Rad. Der Rahmen ist rohrförmig und weist einen einheitlichen Querschnitt auf. Der Querschnitt des Rahmens ist damit überall gleich. Er kann kreisrund, oval oder tropfenförmig sein.

### Die Erfindung und ihre Vorteile

Die erfindungsgemäße Schubkarre mit den Merkmalen des Anspruchs 1 zeichnet sich dadurch aus, dass das Gestell aus mindestens einem länglichen Hohlkörper geformt ist, der in verschiedenen Abschnitten unterschiedliche Querschnitte aufweist. Dabei ist die äußere Form des Querschnitts in mindestens einem geradlinig verlaufenden Abschnitt oval und nicht kreisförmig. Es handelt sich dabei um den Querschnitt des Hohlkörpers senkrecht zur Längsrichtung des Hohlkörpers. Der Hohlkörper weist die Form eines Rohrs mit einigen Krümmungen auf. Durch dieses Rohr ist in den verschiedenen Abschnitten eine Längsrichtung vorgegeben. Die äußere Form des Querschnitts bezieht sich auf die nach außen weisende Seite der Wand des Hohlkörpers. Der unterschiedliche Querschnitt des Hohlkörpers in den verschiedenen Abschnitten des Gestells resultiert dabei alternativ oder kumulativ aus unterschiedlichen Formen des Querschnitts oder aus unterschiedlichen Wandstärken. Die ovale von einer Kreisform abweichende Form sorgt für eine höhere Stabilität, insbesondere, wenn die Ausdehnung in vertikaler Richtung größer ist als in horizontaler Richtung. Darüber hinaus ist der Querschnitt des Hohlkörpers in verschiedenen Abschnitten an die unterschiedlichen Anforderungen hinsichtlich der Stabilität und der Gewichtsbelastung angepasst. Abschnitte, in denen besonders hohe Kräfte wirken, weisen eine größere Wandstärke auf als Abschnitte, in denen geringere Kräfte auftreten. Damit ist der Hohlkörper des Gestells optimal an die speziellen Anforderungen angepasst. Da die Wandstärke nur in denjenigen Abschnitten größer ist, in denen große Kräfte auftreten, kann Material in denjenigen Abschnitten eingespart werden, in denen geringere Kräfte auftreten. Dies führt dazu, dass das Gestell bei höherer Stabilität ein geringeres Gewicht aufweisen kann als bei bekannten Schubkarren. Darüber hinaus ist eine ausreichende Steifigkeit des Gestells auch bei Torsion gegeben.

Der Hohlkörper des Gestells kann beispielsweise aus Kunststoff bestehen und mittels einer Fluidinjektionstechnik hergestellt sein. Darüber hinaus kann der Hohlkörper aus einem Metallrohr bestehen, das mittels Innenhochdruckumformung, auch genannt Hydroforming, in die gewünschte Form gebracht wird.

Beide Materialen und Verfahren eignen sich zur Herstellung großer Stückzahlen von Gestellen. Sie ermöglichen die Produktion von Hohlkörpern mit für ein Gestell notwendigen Krümmungen, mit unterschiedlichen Querschnitten in verschiedenen Abschnitten und mit einer ovalen Außenkontur.

Nach einer vorteilhaften Ausgestaltung der Erfindung weist die ovale äußere Form des Hohlkörpers in mindestens einem Abschnitt in vertikaler Richtung eine größere Ausdehnung auf als in horizontaler Richtung. Diese Form sorgt dafür, dass das Gestell im Bezug auf Gewichtskräfte von in der Lastenaufnahmeeinrichtung angeordneten Lasten besonders stabil ist. Diese Gewichtskräfte wirken in vertikaler Richtung.

Nach einer weiteren vorteilhaften Ausgestaltung der Erfindung sind die Wandstärken des Hohlkörpers in verschiedenen geradlinig verlaufenden Abschnitten des Gestells unterschiedlich. In Abschnitten, in welchen bei einer befüllten Lastenaufnahmeeinrichtung hohe Kräfte wirken, ist die Wandstärke bevorzugt höher als in Abschnitten mit geringerer Krafteinwirkung. Dies sorgt für eine höhere Stabilität der Schubkarre.

Der Hohlkörper weist in mindestens einem Abschnitt eine Krümmung auf. Dabei ist die Wandstärke des Hohlkörpers in dem bezüglich der Krümmung nach innen gerichteten Bereich kleiner als in dem nach außen gerichteten Bereich. Dadurch wird dafür Sorge getragen, dass auf den nach außen weisenden Bereich größere Kräfte wirken und damit eine höhere Stabilität benötigt wird als in dem nach innen weisenden Bereich. Eine derartige Krümmung ist beispielsweise im Abschnitt der Stützen vorgesehen. Dabei ist der nach außen weisende Bereich in der Ruheposition dem Untergrund zugewandt. Er ist daher einer höheren mechanischen Belastung aufgrund von Reibung ausgesetzt insbesondere beim Absetzen der Schubkarre und bei einer Bewegung der Schubkarre gegenüber dem Untergrund, wenn die Schubkarre mit ihren Stützen nicht vollständig angehoben ist. Ein aufgrund starker Reibungskräfte auftretender Abrieb sorgt bei einer größeren Wandstärke in diesem Abschnitt nicht für eine signifikante Beschädigung der Schubkarre, da in diesem Bereich genügend Material des Hohlkörpers vorhanden ist.

Nach einer weiteren vorteilhaften Ausgestaltung der Erfindung weist der Hohlkörper des Gestells in dem Abschnitt der Stützen eine Krümmung auf. Dabei weist der Hohlkörper an der bezüglich der Krümmung nach außen gerichteten und in der Ruhestellung der Schubkarre nach unten weisenden Außenseite mehrere Rippen aufweist, die über die die Rippen umgebende Oberfläche überstehen. An der dem Boden zugewandten Außenseite der Krümmung ist der Hohlkörper mit einer Verstärkung ausgestattet. Dabei kann es sich beispielsweise um mehrere Rippen oder Grate handeln, die über die die Rippen umgebende Oberfläche überstehen. Damit berühren die Stützen den Untergrund in der Ruhestellung mit einer geringeren Oberfläche, als bei einer Oberfläche ohne Rippen. Ferner sorgen die Rippen für eine Erhöhung der Stabilität der Stützen in dem auf dem Boden in der Ruhestellung aufsetzenden Bereich. Als Verstärkungen können an der Außenseite der Krümmung auch zusätzliche Stifte oder Platten vorgesehen sein, die über die Oberfläche des Hohlkörpers überstehen und mittels einer Steck-, Schraub- oder Klebeverbindung mit dem Hohlkörper verbunden sind. Diese zusätzlichen Verstärkungsteile können bei Verschleiß ausgetauscht werden.

Nach einer weiteren vorteilhaften Ausgestaltung der Erfindung weist das Gestell zwei baugleiche Hohlkörper auf mit jeweils einer Griffstange mit Griff, einer Stütze und einer Radaufhängung, an welcher das Rad drehbar angeordnet ist. Durch die beiden baugleichen Hohlkörper wird die Herstellung erleichtert. Die beiden Hohlkörper können entweder nur durch die Lastenaufnahmeeinrichtung miteinander verbunden sein oder es können zusätzliche Verbindungselemente vorgesehen sein.

Nach einer weiteren vorteilhaften Ausgestaltung der Erfindung weist jeder der beiden baugleichen Hohlkörper an dem der Griffstange abgewandten Ende eine vordere Verbindungseinrichtung auf, an welcher die Lastenaufnahmeeinrichtung mit dem Gestell verbunden ist. Handelt es sich bei der Lastenaufnahmeeinrichtung um einen wannenförmigen Behälter so ist der Behälter im Bereich der in Fahrtrichtung der Schubkarre nach vorne weisenden Wand mit dem Gestell verbunden. Jeder der beiden Hohlkörper weist zwischen der Radaufhängung und der vorderen Verbindungseinrichtung einen als Abrollbügel ausgebildeten, dem Auskippen eines in der Lastenaufnahmeeinrichtung enthaltenen Inhalts dienenden Abschnitt auf. Die beiden Abrollbügel verlaufen bei der Schubkarre in im wesentlichen vertikaler Richtung zu beiden Seiten des Rades. Beim Auskippen wird die Schubkarre um das Rad nach vorne gedreht. Dabei wird das Gewicht von dem Rad auf die beiden Abrollbügel verlagert. Da die Schubkarre an zwei Abrollbügeln abgestützt ist, kann ein unerwünschtes seitliches Ausbrechen der Schubkarre verhindert werden. Die beiden Abrollbügel können ferner dazu dienen, die Schubkarre bei Nichtgebrauch hochkant aufzustellen.

Nach einer weiteren vorteilhaften Ausgestaltung der Erfindung weist jeder der beiden baugleichen Hohlkörper eine hintere Verbindungseinrichtung zwischen der Griffstange und der Stütze auf, an welcher die Lastenaufnahmeeinrichtung mit dem Gestell verbunden ist. Handelt es sich bei der Lastenaufnahmeeinrichtung um einen wannenförmigen Behälter so ist der Behälter im Bereich seiner in Fahrtrichtung der Schubkarre nach hinten weisenden Wand oder im Bereich seines nach unten weisenden Bodens mit dem Gestell verbunden.

Nach einer weiteren vorteilhaften Ausgestaltung der Erfindung weist jeder der beiden baugleichen Hohlkörper zwischen der Stütze und der Radaufhängung eine mittlere Verbindungseinrichtung auf, an welcher die Lastenaufnahmeeinrichtung mit dem Gestell verbunden ist. In bevorzugter Weise sind die beiden Hohlkörper an mehreren Stellen mit der Lastenaufnahme verbunden. Dies sorgt für eine höhere Stabilität der Schubkarre.

Nach einer weiteren vorteilhaften Ausgestaltung der Erfindung ist die Verbindungseinrichtung als Abschnitt des Hohlkörpers ausgebildet. In diesem Abschnitt weist der Hohlkörper eine gegenüber den übrigen Abschnitten des Hohlkörpers größere Auflagefläche für die Lastenaufnahmeeinrichtung auf. Damit kann sich die Lastenaufnahme über einen größeren Bereich an den Hohlkörpern abstützen. Die Gewichtskraft einer befüllten Lastenaufnahmeeinrichtung wird somit in einem größeren Bereich auf das Gestell übertragen. Die Kraft verteilt sich und wirkt nicht punktuell. Dies sorgt für eine größere Stabilität der Schubkarre.

Nach einer weiteren vorteilhaften Ausgestaltung der Erfindung weist der Abschnitt der Verbindungseinrichtung an der der Lastenaufnahmeeinrichtung zugewandten Seite Erhöhungen und/ oder Vertiefungen auf. Die Lastenaufnahmeeinrichtung weist wiederum in dem der Verbindungseinrichtung zugewandten Bereich Erhöhungen und/ oder Vertiefungen auf, welche in die Erhöhungen und/ oder Vertiefungen der Verbindungseinrichtung eingreifen. Damit tritt zwischen der Verbindungseinrichtung und der Lastenaufnahmeeinrichtung eine Verzahnung auf. Diese kann nicht nur nach unten gerichtete Kräfte sondern auch seitlich wirkende Kräfte aufnehmen und kompensieren. In bevorzugter Weise sind die Erhöhungen und/ oder Vertiefungen konisch ausgebildet. Unter Einwirkung der Gewichtskraft einer befüllten Lastenaufnahmeeinrichtung greifen die Erhöhungen und Vertiefungen der Verbindungseinrichtung und der Lastenaufnahmeeinrichtung besonders gut ineinander. Bei der Montage der Lastenaufnahmeeinrichtung auf dem Gestell führt die konische Form der Erhöhungen und Vertiefungen zu einer exakten Positionierung der Lastenaufnahmeeinrichtung an dem Gestell, ohne dass hierzu spezielle Hilfsmittel eingesetzt werden müssen. Ferner wird durch die konische Form der Erhöhungen und Vertiefungen ein Fließen der Werkstoffe des Gestells und der Lastenaufnahmeeinrichtung bei Einwirkung großer Kräfte reduziert oder kompensiert. Durch ein Festspannen der Lastenaufnahmeeinrichtung an dem Gestell über die Erhöhungen und Vertiefung ein durch zusätzliche Befestigungsmittel wird die Stabilität und Steifigkeit der Schubkarre gegenüber Torsion erhöht.

Die Befestigung der Lastenaufnahmeeinrichtung an dem Gestell insbesondere im Bereich der Verbindungseinrichtungen kann beispielsweise durch eine Schnapp- oder Rastverbindung erfolgen, mit der ein Abschnitt der Lastenaufnahmeeinrichtung in einen Abschnitt des Gestells, insbesondere der Verbindungseinrichtungen des Gestells, einrastet oder einschnappt. Alternativ oder kumulativ können zusätzliche Befestigungsmittel wie beispielsweise Schrauben, Nieten oder Zapfen eingesetzt werden.

Nach einer weiteren vorteilhaften Ausgestaltung der Erfindung sind die Stützen als V-förmige Abschnitte des mindestens einen Hohlkörpers ausgebildet. Der Winkel zwischen den beiden Schenkeln jedes V-förmigen Abschnitts beträgt bevorzugt zwischen 40° und 80°.

Nach einer weiteren vorteilhaften Ausgestaltung der Erfindung sind die beiden Schenkel jedes V-förmigen Abschnitts durch einen zusammen mit den Schenkeln ein Dreieck aufspannenden Träger miteinander verbunden. Der Träger sorgt für zusätzliche Stabilität, da er Kräfte aufnimmt, die von oben auf den V-förmigen Abschnitt wirken und die Tendenz haben, den Öffnungswinkel des V-förmigen Abschnitts zu vergrößern. Der Träger kann als Hohlkörper oder als Profil ohne Hohlraum ausgebildet sein. Er kann als zusätzliche Auflagefläche für die Lastaufnahmeeinrichtung ausgebildet sein. Hierzu kann der Träger eine der Lastaufnahmeeinrichtung zugewandte ebene Fläche aufweisen, auf der die Lastaufnahmeeinrichtung aufliegt. Der Träger kann beispielsweise eine L- oder U-Form im Querschnitt aufweisen.

Nach einer weiteren vorteilhaften Ausgestaltung der Erfindung ist die Radaufhängung als Abschnitt des mindestens einen Hohlkörpers ausgebildet. Dabei ist der Querschnitt des Abschnitts der Radaufhängung größer als die Querschnitte der benachbarten Abschnitte. Der Abschnitt der Radaufhängung weist eine Aufnahme für eine feststehende oder drehbare Achse des Rades auf. Bei der Aufnahme kann es sich beispielsweise um einen zylindrischen Ansatz handeln, der in Richtung des Rades von dem Hohlkörper absteht. In den zylindrischen Ansatz wird die Achse des Rades eingesetzt. Die Achse wird damit auf zwei Seiten von den Aufnahmen der Hohlkörper gehalten. Dank des verbreiterten Querschnitts des Hohlkörpers im Abschnitt der Radaufhängung ist genügend Platz für die Aufnahme der Achse vorhanden.

Nach einer weiteren vorteilhaften Ausgestaltung der Erfindung weist der Abschnitt der Radaufhängung als Rippen oder Grate ausgebildete Verstärkungselemente auf. Diese stehen radial oder zumindest strahlenförmig nach außen von der Aufnahme der Achse ab oder sind unter einem Winkel gegen die radiale Richtung geneigt. Sie stehen ferner auf der dem Rad zugewandten Seite der Hohlkörper über die benachbarte Oberfläche der Hohlkörper über. Je zwei benachbarte Rippen oder Grate bilden zwei Seiten eines Dreiecks. Je mehr Rippen oder Grate vorhanden sind, umso größer ist die Stabilität der Hohlkörper im Abschnitt der Radaufhängung. Darüber hinaus kann durch eine höhere Wandstärke der Hohlkörper eine hohe Stabilität erzielt werden.

Nach einer weiteren vorteilhaften Ausgestaltung der Erfindung sind die Griffe als Abschnitte des mindestens einen Hohlkörpers im Bereich der Griffstangen ausgebildet. Dabei sind die Griffe mit einer Griffmulde für den Daumen und/ oder mit einer Griffmulde für einen weiteren Finger, beispielsweise den Zeigefinger ausgebildet. Die Griffe sind ergonomisch geformt und der Hand eines Benutzers angepasst. Die Oberfläche der Griffe ist möglichst groß, so dass sie gut in der Hand liegen. Die Griffmulden für den Daumen und/ oder einen weiteren Finger sorgen dafür, dass der Griff sicher mit der Hand eines Benutzers gehalten werden kann, und der Griff nicht ohne weiteres der Hand entgleiten kann. Ferner kann die Oberfläche der Griffe mit einer speziellen Struktur oder einem speziellen Material versehen sein, so dass die Haptik verbessert und die Reibung zwischen der Hand eines Benutzers und den Griffen vergrößert ist.

Nach einer weiteren vorteilhaften Ausgestaltung der Erfindung weist die Lastenaufnahmeeinrichtung mindestens einen als Versteifungselement ausgebildeten länglichen Hohlraum auf. Handelt es sich beispielsweise bei der Lastenaufnahmeeinrichtung um einen wannenförmigen Behälter, so können an der nach außen weisenden Seite des Behälters mehrere offene oder geschlossene Kanäle vorgesehen sein. Diese können beispielsweise geradlinig entlang oder nahe der Kanten verlaufen. An dem viereckigen Boden eines wannenförmigen Behälters können beispielsweise zwei diagonal verlaufende Kanäle angeordnet sein, die sich kreuzen. Dadurch wird eine Stabilität im Bezug auf Torsionskräfte erreicht. Zur Erhöhung der Stabilität im Bezug auf Kräfte, die beim seitlichen Auskippen der Schubkarre auftreten, können zusätzliche Hohlräume an der Lastenaufnahmeeinrichtung im Bereich der Verbindungseinrichtung zwischen Gestell und Lastenaufnahmeeinrichtung vorgesehen sein.

Nach einer weiteren vorteilhaften Ausgestaltung der Erfindung sind in die Lastenaufnahmeeinrichtung Verstärkungselemente integriert. Diese können insbesondere in die Wandabschnitte und/ oder den Boden der Lastenaufnahmeeinrichtung bei der Herstellung aufgenommen werden. Sie können als Rippen oder Grate ausgebildet sein und über die nach außen weisende Oberfläche der Lastenaufnahme überstehen. Darüber hinaus können sie derart in das Material der Lastenaufnahmeeinrichtung eingebettet sein, dass sie von außen nicht sichtbar sind. Derartige eingebettete Verstärkungselemente können auch aus einem anderen Material als die Lastenaufnahmeeinrichtung bestehen. Im Unterschied zu den Versteifungselementen weisen die Verstärkungselemente keinen Hohlraum auf. Sie können sich wie die oben beschriebenen Versteigungselemente beispielsweise entlang der Kanten der Lastenaufnahmeeinrichtung verlaufen oder kreuzweise angeordnet sein. Sie können sich beispielsweise von einem Befestigungsbereich der Lastenaufnahme an dem Gestell bis zu einem anderen Befestigungsbereich erstrecken.

Nach einer weiteren vorteilhaften Ausgestaltung der Erfindung können zusätzliche Verstärkungs- oder Versteifungselemente an der Lastaufnahmeeinrichtung dem Gestell bei der Montage der Schubkarre angeordnet werden. Hierbei kann es sich beispielsweise um Profile aus Metall oder Kunststoff handeln.

Zur zusätzlichen Stabilisierung der Schubkarre können an dem Gestell, beispielsweise an den Griffstangen oder zwischen den Griffstangen und den Stützen, Abschnitte vorgesehen sein, die in Richtung der Lastenaufnahmeeinrichtung vorstehen, und die über Befestigungsmittel wie beispielsweise Schrauben mit der Lastenaufnahmeeinrichtung verbunden sind.

Nach einer weiteren vorteilhaften Ausgestaltung der Erfindung weist die Lastenaufnahmeeinrichtung zumindest abschnittsweise einen Aufbau aus mehreren Schichten auf. Die Schichten können aus gleichen oder verschiedenen Materialien bestehen. Sie können hinsichtlich ihrer Dicke identisch oder verschieden sein. Eine der Schichten kann beispielsweise auch aus Fasern, Drähten oder Fäden bestehen, die miteinander in Form eines Gewebes oder Gewirkes verbunden sind.

Nach einer weiteren vorteilhaften Ausgestaltung der Erfindung weist die Lastenaufnahmeeinrichtung ein geschäumtes Material auf. Dabei kann es sich insbesondere um einen geschäumten Kunststoff handeln. Schaumstrukturen in Kunststoff werden beispielsweise bei der Herstellung mittels Spritzguss durch die Zugabe von Treibmittel als Additiv in der Kunststoffschmelze erzeugt. Ferner kann Stickstoff in die heiße Kunststoffschmelze injiziert werden. Durch das geschäumte Material wird das Gewicht der Lastenaufnahmeeinrichtung reduziert ohne dass dadurch die Stabilität gemindert wird. Die Festigkeit kann sogar erhöht werden. Weist die Lastenaufnahmeeinrichtung einen Aufbau aus mehreren Schichten auf, so kann beispielsweise eine der Schichten aus einem geschäumten Material bestehen.

Nach einer weiteren vorteilhaften Ausgestaltung der Erfindung besteht das Gestell aus Kunststoff. Der oder die zugehörigen Hohlkörper können mittels Fluidinjektionstechnik hergestellt werden. Dabei wird Kunststoffschmelze in die Kavität eines Spritzgusswerkzeugs eingebracht und anschließend durch Einleiten eines Fluids in die noch flüssige Schmelze ein Hohlraum erzeugt. Es besteht die Möglichkeit die Hohlkörper aus zwei unterschiedlichen Komponenten herzustellen: eine erste Komponente, welche die Innenseite des Hohlkörpers bildet und eine zweite Komponente, welche die Außenseite bildet.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel der erfindungsgemäßen Schubkarre dargestellt. Es zeigen:
- Figur 1: erstes Ausführungsbeispiel einer Schubkarre in Seitenansicht,
- Figur 2: hinterer Teil des Gestells der Schubkarre gemäß Figur 1 in Seitenansicht,
- Figur 3: vorderer Teil des Gestells der Schubkarre gemäß Figur 1 in Seitenansicht,
- Figur 4: Abschnitt mit Radaufhängung und Abrollbügel des Gestells der Schubkarre gemäß Figur 1 in Seitenansicht,
- Figur 5: Teil der Stütze des Gestells der Schubkarre gemäß Figur 1, teilweise im Längsschnitt,
- Figur 6: Griff der Schubkarre gemäß Figur 1 in Seitenansicht mit Konturlinien,
- Figur 7: Griff gemäß Figur 6 in Schnittdarstellung,
- Figur 8: Teil des Gestells der Schubkarre gemäß Figur 1 in perspektivischer Darstellung beim Abrollen der Abrollbügel auf einem Untergrund,
- Figur 9: Abschnitt der Radaufhängung der Schubkarre gemäß Figur 1 in verschiedenen Ansichten,
- Figur 10: Stütze der Schubkarre gemäß Figur 1 in Seitenansicht, teilweise frei geschnitten, und in einer Ansicht von oben, teilweise frei geschnitten,
- Figur 11: hintere Verbindungseinrichtung der Schubkarre gemäß Figur 1,
- Figur 12: oberes Ende des Abrollbügels der Schubkarre gemäß Figur 1,
- Figur 13: zweites Ausführungsbeispiel einer Schubkarre in Seitenansicht, wobei das Gestell nur teilweise dargestellt ist,
- Figur 14: Lastenaufnahmeeinrichtung der Schubkarre gemäß Figur 13 in Seitenansicht,
- Figur 15: Stütze der Schubkarre gemäß Figur 13 in Seitenansicht,
- Figur 16: erstes Ausführungsbeispiel einer Lastenaufnahmeeinrichtung für eine Schubkarre gemäß Figur 1 oder Figur 13, Ansicht von unten,
- Figur 17: zweites Ausführungsbeispiel einer Lastenaufnahmeeinrichtung für eine Schubkarre gemäß Figur 1 oder Figur 13, Ansicht von unten,
- Figur 18: drittes Ausführungsbeispiel einer Lastenaufnahmeeinrichtung für eine Schubkarre gemäß Figur 1 oder Figur 13, Ansicht von unten,
- Figur 19: Lastenaufnahmeeinrichtung gemäß Figur 16 mit zusätzlichen Verstärkungselementen in einer Ansicht von unten,
- Figur 20: Verstärkungselement gemäß Figur 19,
- Figur 21: zweites Ausführungsbeispiel eines Verstärkungselements,
- Figur 22: drittes Ausführungsbeispiel eines Verstärkungselements,
- Figur 23: Lastenaufnahmeeinrichtung gemäß Figur 19 in einer Ansicht von vorne,
- Figur 24: erstes Ausführungsbeispiel von Profilen an dem Gestell und der Lastenaufnahmeeinrichtung einer Schubkarre gemäß Figur 1 oder Figur 13,
- Figur 25: zweites Ausführungsbeispiel von Profilen an dem Gestell und der Lastenaufnahmeeinrichtung einer Schubkarre gemäß Figur 1 oder Figur 13.

### Beschreibung des Ausführungsbeispiels

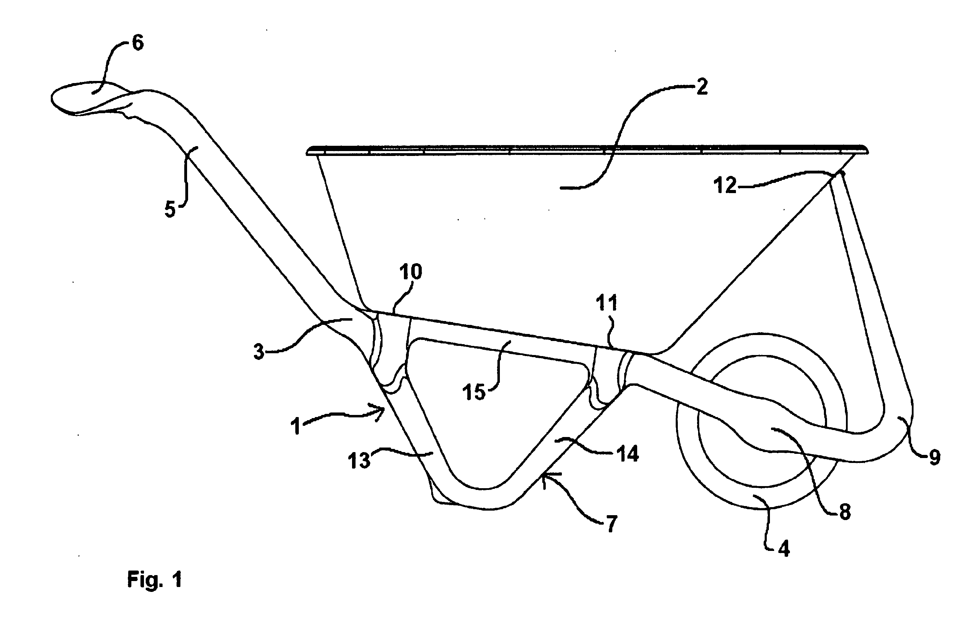

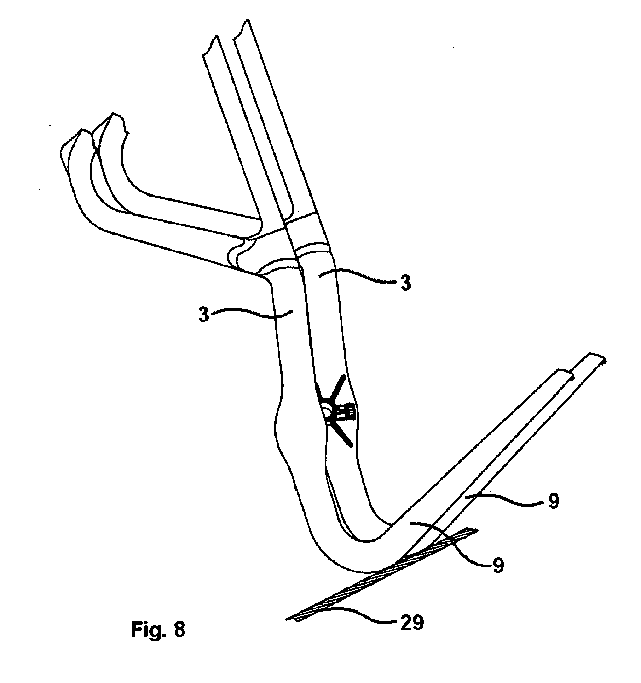

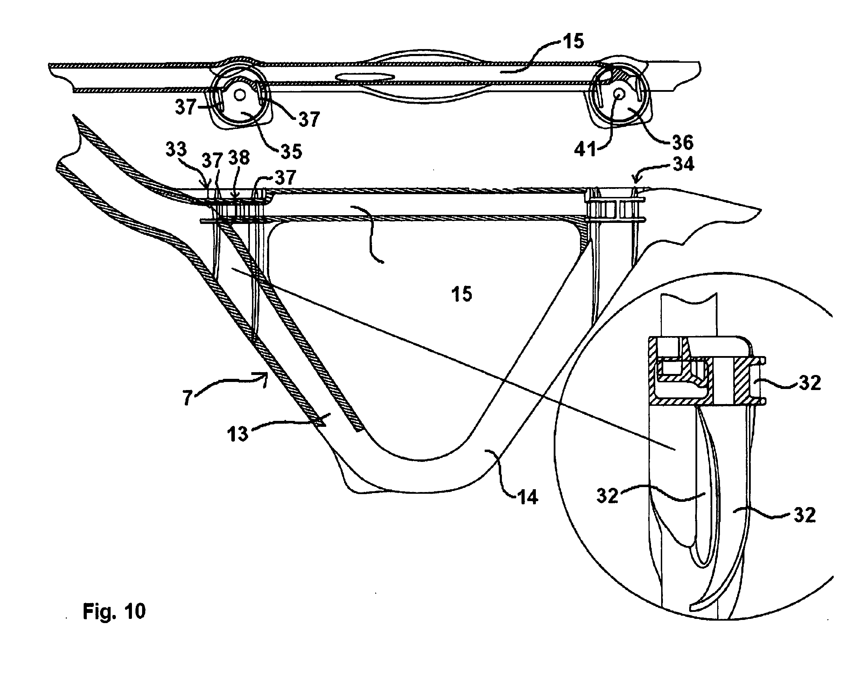

In Figur 1 ist eine Schubkarre mit einem Gestell 1 und einer Lastenaufnahmeeinrichtung 2 in Seitenansicht dargestellt. Die Lastenaufnahmeeinrichtung 2 hat die Form eines wannenförmigen Behälters. Das Gestell 1 weist zwei baugleiche Hohlkörper 3 und ein Rad 4 auf. Von den zwei baugleichen Hohlkörpern ist nur der dem Betrachter zugewandte Hohlkörper 3 in der Darstellung erkennbar. Der andere Hohlkörper ist durch den ersten Hohlkörper verdeckt. In Figur 8 sind beide Hohlkörper zumindest abschnittsweise erkennbar. Jeder der beiden Hohlkörper 3 weist eine Griffstange 5 mit einem Griff 6, eine Stütze 7, eine Radaufhängung 8 und einen Abrollbügel 9 auf. An den Positionen 10, 11 und 12 ist das Gestell 1 mit der Lastenaufnahmeeinrichtung 2 über in der Zeichnung nicht dargestellte Befestigungsmittel fest verbunden. An diesen Positionen 10, 11 und 12 sind die Hohlkörper des Gestells mit Verbindungseinrichtungen ausgestattet. Diese sind in den Figuren 10, 11 und 12 dargestellt. Die Verbindungseinrichtungen bilden an den Positionen 10 und 11 eine Auflage für die Lastenaufnahmeeinrichtung 2 und weisen Befestigungsmittel zum Befestigen der Lastenaufnahmeeinrichtung an dem Gestell auf. Die Hohlkörper 3 sind im Bereich der Positionen 10 und 11 zusätzlich hinsichtlich ihrer Wandstärke verstärkt. An der Position 12 ist das obere Ende des Abrollbügels 9 mit der Lastenaufnahmeeinrichtung 2 verbunden. Im Vergleich zu den Positionen 10 und 11 ist an der Position 12 die Auflagefläche der Lastenaufnahmeeinrichtung an dem Gestell wesentlich kleiner. Die Stütze 7 besteht aus einem V-förmigen Abschnitt mit zwei Schenkeln 13 und 14 und einem die beiden Schenkel 13 und 14 miteinander verbindenden Träger 15. Der Träger 15 sorgt für eine Stabilisierung der Stütze und dient außerdem als Auflage für die Lastenaufnahmeeinrichtung.

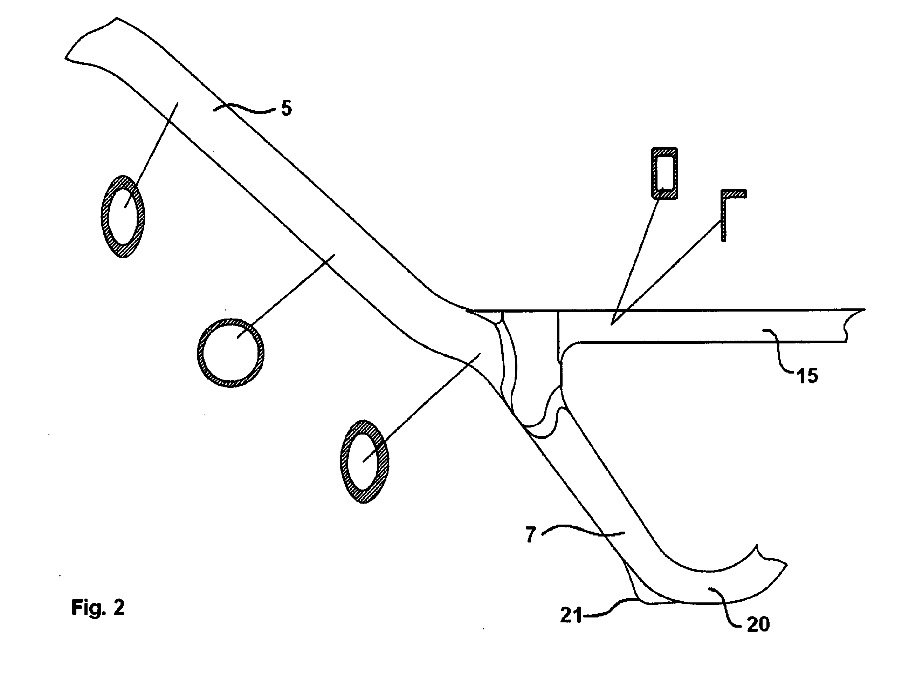

Figur 2 zeigt einen Teil des Hohlkörpers 3 des Gestells mit einem Abschnitt der Griffstange 5 und einem Abschnitt der Stütze 7. Ferner sind die Querschnitte 16, 17, 18 und 19 an verschiedenen Positionen der Griffstange und der Stütze dargestellt. Dabei ist erkennbar, dass der Querschnitt der Griffstange 5 in einem Bereich kreisrund und in anderen Bereichen elliptisch ist. Der Querschnitt des Trägers 15 ist dagegen rechteckig. Die Stütze 7 weist zwischen den beiden Schenkeln 13 und 14 eine Krümmung 20 auf. An der Krümmung ist ein Grat 21 vorgesehen.

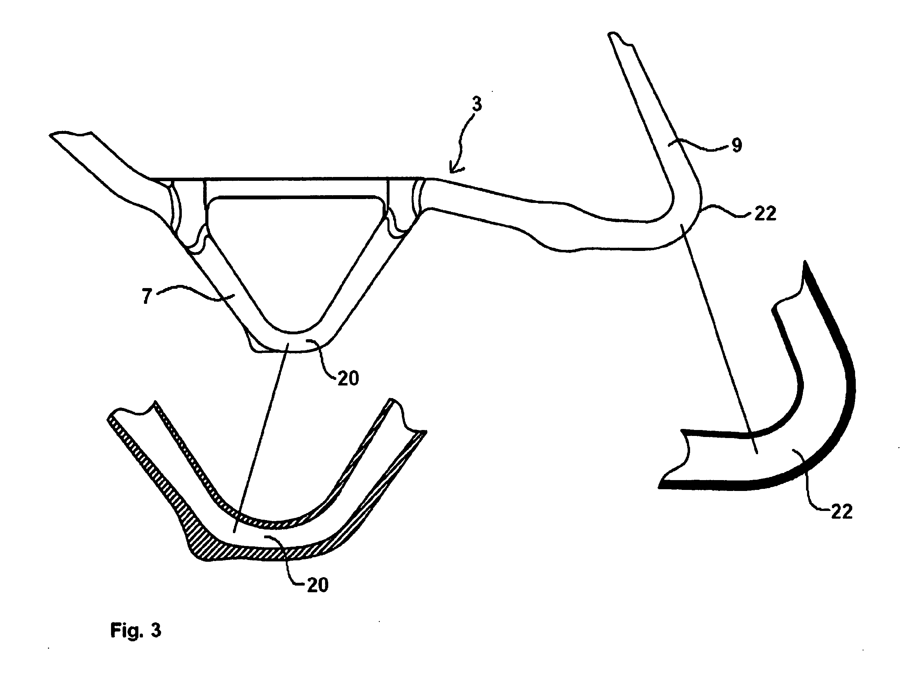

Figur 3 zeigt einen weiteren Teil des Hohlkörpers 3 des Gestells 1 mit einem Abschnitt der Stütze 7, der Radaufhängung 8 und des Abrollbügels 9. In der Darstellung sind ferner Details im Längsschnitt dargestellt. Daraus ist erkennbar, dass die Wandstärke des Hohlkörpers 3 im Bereich der Krümmung 20 der Stütze 7 und im Bereich der Krümmung 22 des Abrollbügels 9 an der im Bezug auf die Krümmung nach außen gerichteten Seite größer ist als an der nach innen gerichteten Seite.

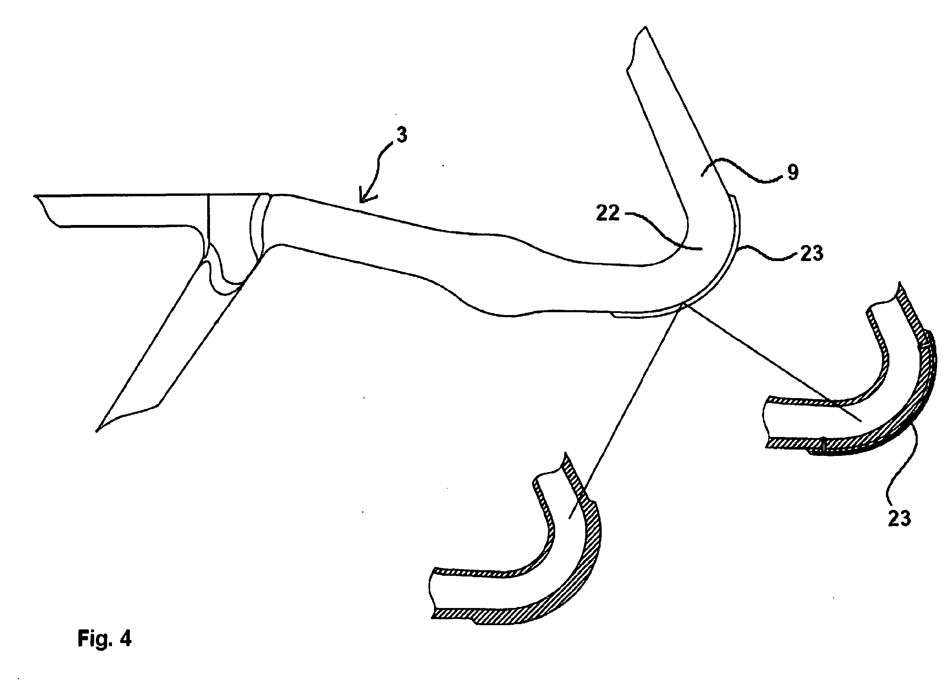

Figur 4 zeigt einen Teil des Hohlkörpers 3 des Gestells 1 wobei an der Krümmung 22 des Abrollbügels 9 eine Verstärkung 23 aus Metall angeordnet ist.

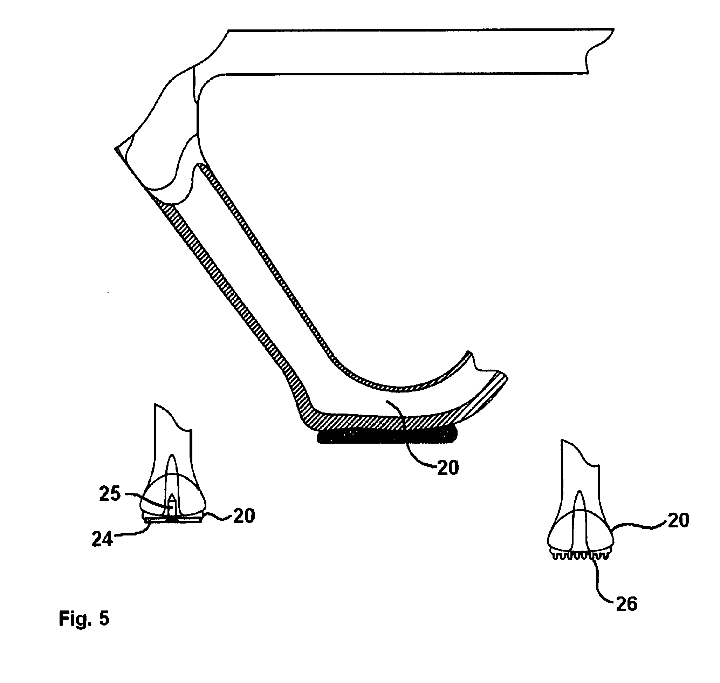

Figur 5 zeigt die Krümmung 20 der Stütze 7 mit zwei unterschiedlichen Verstärkungen. Im oberen Teil von Figur 5 ist die Stütze 7 in Seitenansicht dargestellt. Die beiden unteren Details zeigen die Stütze im Bereich der Krümmung 20 in einer um 90° gedrehten Darstellung. Die oben dargestellte Variante weist eine Platte 24 auf, welche mit einer Schraube 25 an dem Hohlkörper 3 im Bereich der Krümmung 20 befestigt ist. Die unten dargestellte Variante weist mehrere Rippen 26 auf, die sich an der nach unten weisenden Außenseite der Krümmung 20 nach unten erstrecken und welche über die benachbarte Oberfläche des Hohlkörpers 3 überstehen.

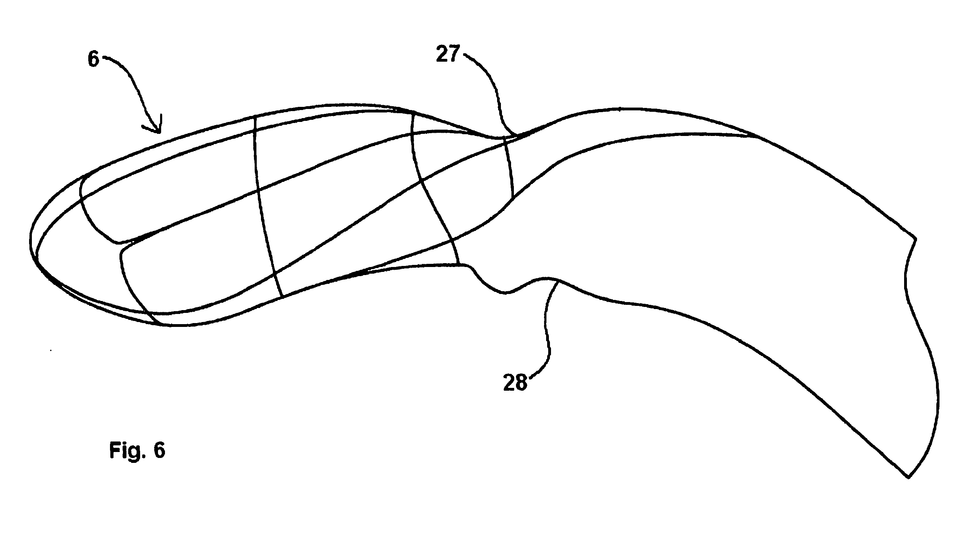

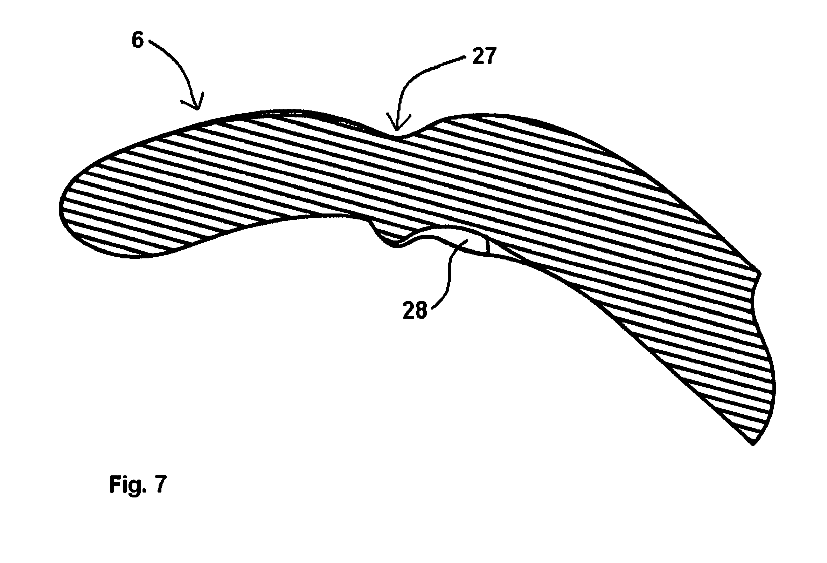

Figur 6 und 7 zeigen den Griff 6. Der Griff 6 weist eine erste Griffmulde 27 für den Daumen und eine zweite Griffmulde 28 für den Zeigefinger auf. Die Konturlinien in Figur 6 verdeutlichen die äußere Form des Griffs 6.

Figur 8 zeigt Teile des Gestells 1 beim Abrollen der Abrollbügel 9 der beiden Hohlkörper 3 auf einem Untergrund 29. Der Übersichtlichkeit halber sind das Rad und die Lastenaufnahmeeinrichtung nicht dargestellt.

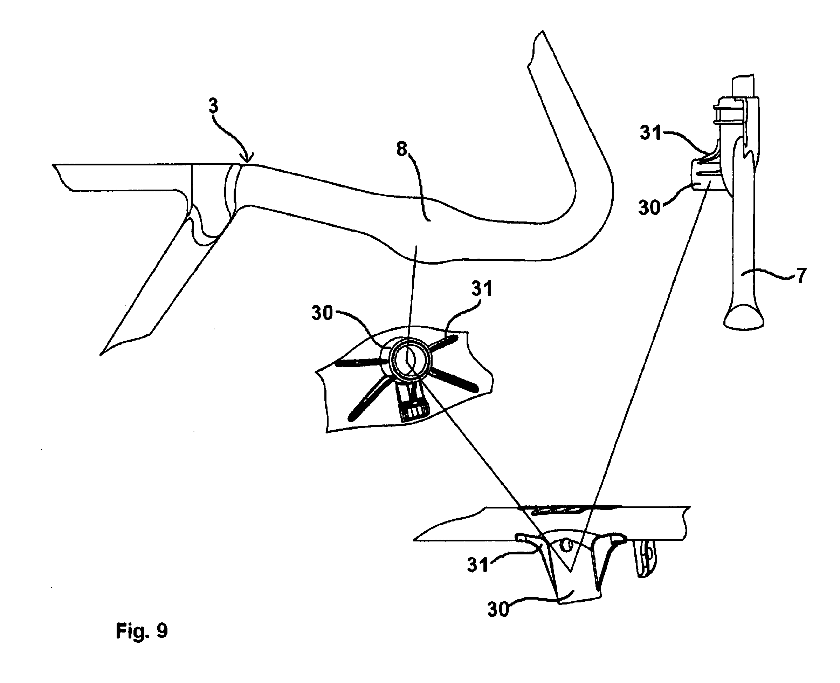

Figur 9 zeigt den Abschnitt der Radaufhängung 8 des Hohlkörpers 3 in Seitenansicht mit mehreren Details. An der dem Rad 4 zugewandten Seite ist im Abschnitt der Radaufhängung 8 eine zylindrische Aufnahme 30 für eine in der Zeichnung nicht dargestellte Achse des Rades 4 angeordnet. Die Aufnahme 30 ist mit strahlenförmig verlaufenden Verstärkungselementen 31 ausgestattet.

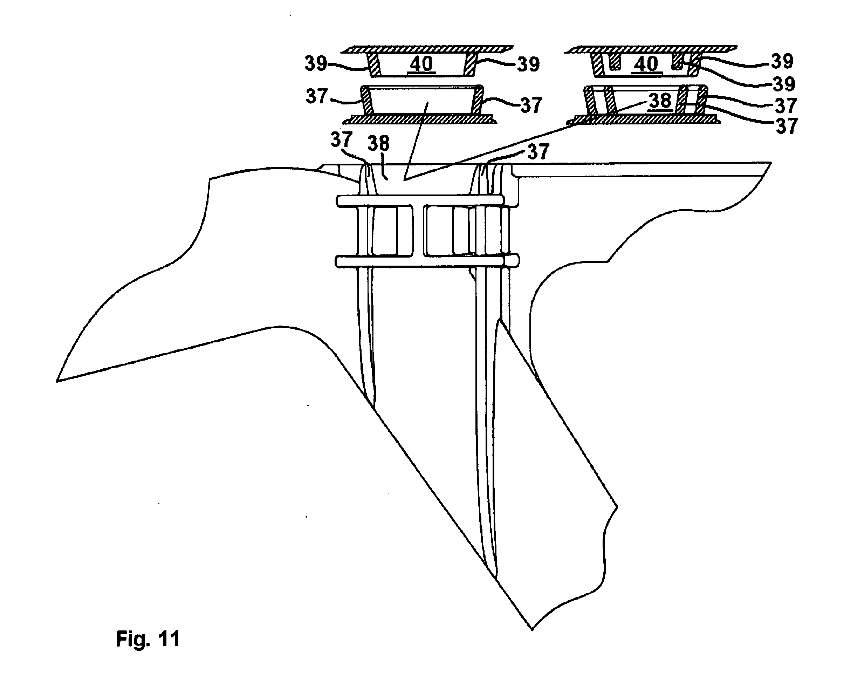

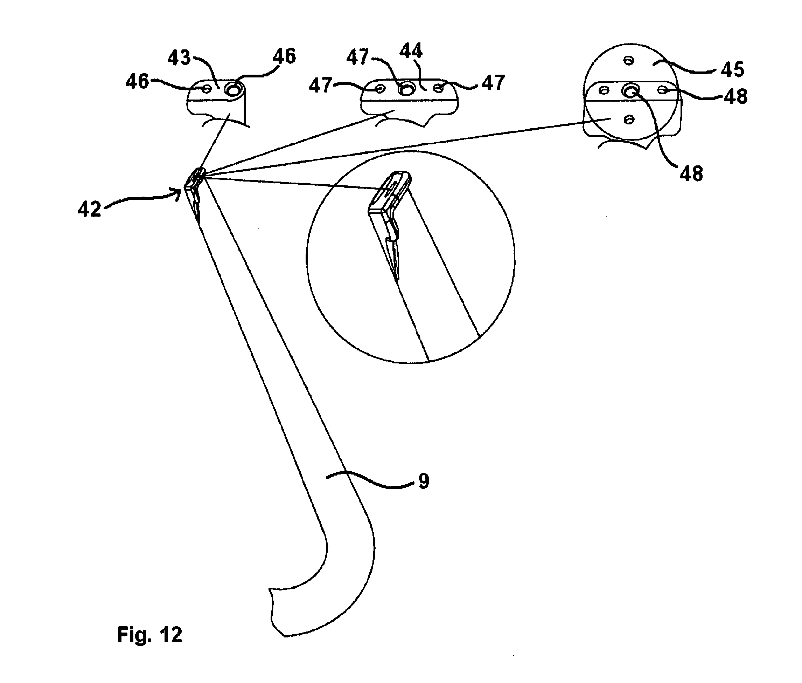

Figur 10 zeigt die Stütze 7 der Schubkarre in einer Seitenansicht und in einer Ansicht von oben. Dabei sind in beiden Ansichten Teile der Stütze frei geschnitten. Im Bereich des Übergangs zwischen dem Schenkel 13 und dem Trägers 15 sowie zwischen dem Schenkel 14 und dem Träger 15 sind zusätzliche Konturen 32 vorgesehen, die das Gestell in diesem Bereich verstärken und stabilisieren. Eine hintere Verbindungseinrichtung 33 und eine mittlere Verbindungseinrichtung 34 dienen der Verbindung und Befestigung der Lastenaufnahmeeinrichtung 2 an dem Gestell 1. Die hintere Verbindungseinrichtung ist auf der dem Griff zugewandte Seite der Stütze angeordnet und liegt daher in Fahrtrichtung der Schubkarre hinten. Die mittlere Verbindungseinrichtung 34 ist auf der der Radaufhängung zugewandten Seite der Stütze angeordnet. Sie befindet sich zwischen der hinteren Verbindungseinrichtung 33 und der in Figur 12 dargestellten vorderen Verbindungseinrichtung, die in Fahrtrichtung der Schubkarre nach vorne weist. Über die hintere und die mittlere Verbindungseinrichtung wird an den in Figur 1 markierten Positionen 10 und 11 die Lastenaufnahmeeinrichtung 2 mit dem Gestell 1 verbunden. Dabei bilden die Verbindungselemente 35 und 36 eine Auflage für die Lastenaufnahmeeinrichtung 2. In die beiden Erhöhungen 37 an den Verbindungselementen und die Vertiefung 38 zwischen den Erhöhungen 37 kann die Lastenaufnahmeeinrichtung dank entsprechender Erhöhungen 39 und Vertiefung 40 eingreifen. Letztere sind in Figur 11 dargestellt. Figur 11 zeigt hierzu zwei Varianten. Die Erhöhungen 37 und 39 sowie die Vertiefung sind konisch geformt. Durch die kreisrunde Öffnung 41 kann ein zusätzliches Befestigungsmittel, beispielsweise eine Schraube eingeführt und mit der Lastenaufnahmevorrichtung verbunden werden.

Figur 12 zeigt das obere Ende des Abrollbügels 9 mit der zugehörigen vorderen Verbindungseinrichtung 42. Zu der vorderen Verbindungseinrichtung sind drei Varianten angegeben, die sich hinsichtlich der Größe der Auflagefläche 43, 44, 45 für die Lastenaufnahmeeinrichtung und der Anzahl der Bohrungen 46, 47, 48 für zusätzliche Befestigungsmittel unterscheiden. Dank dieser vorderen Verbindungseinrichtung wird an Position 12 eine Verbindung zwischen dem Gestell 1 und der Lastenaufnahmevorrichtung 2 hergestellt.

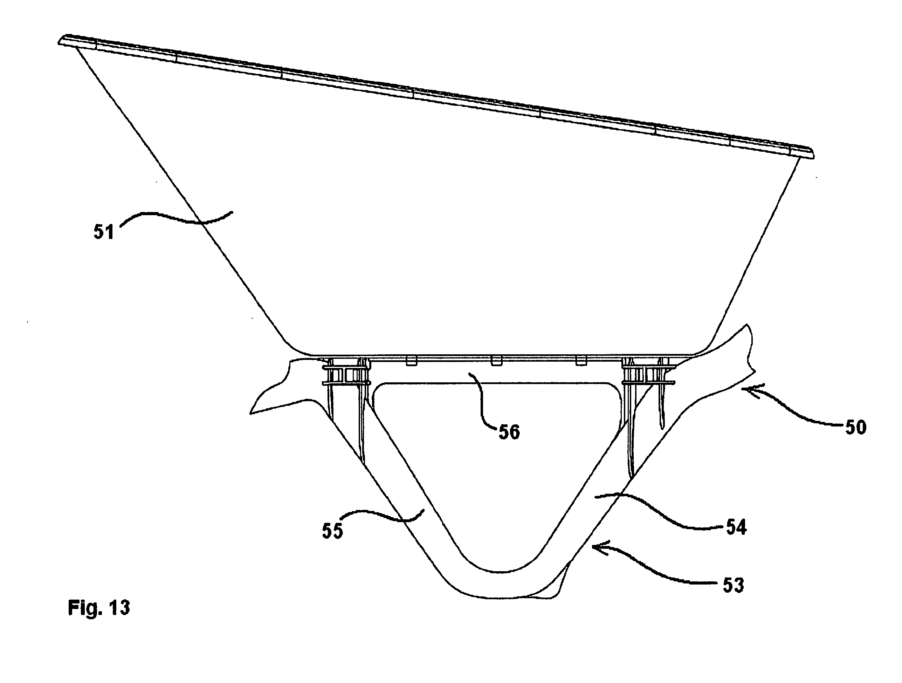

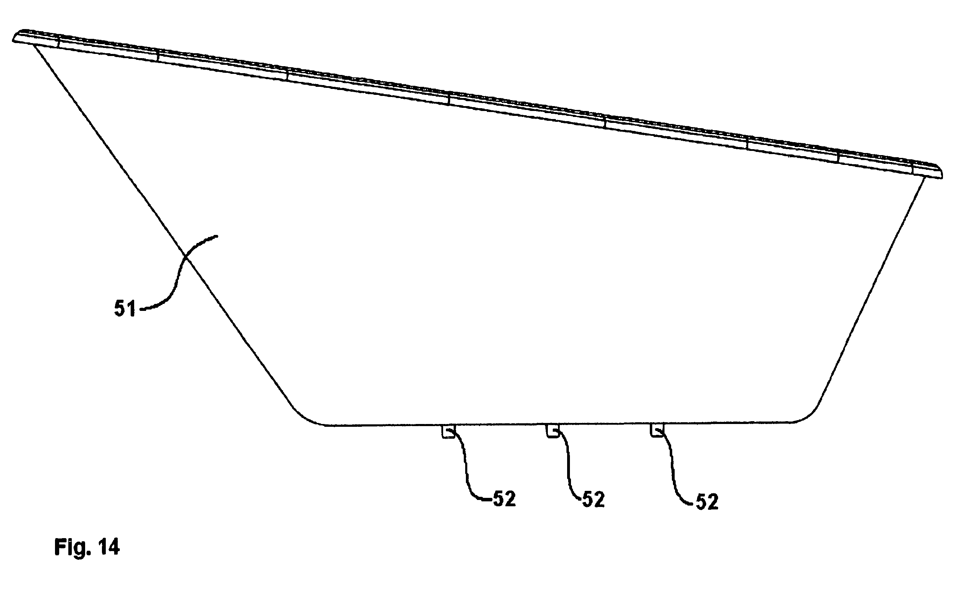

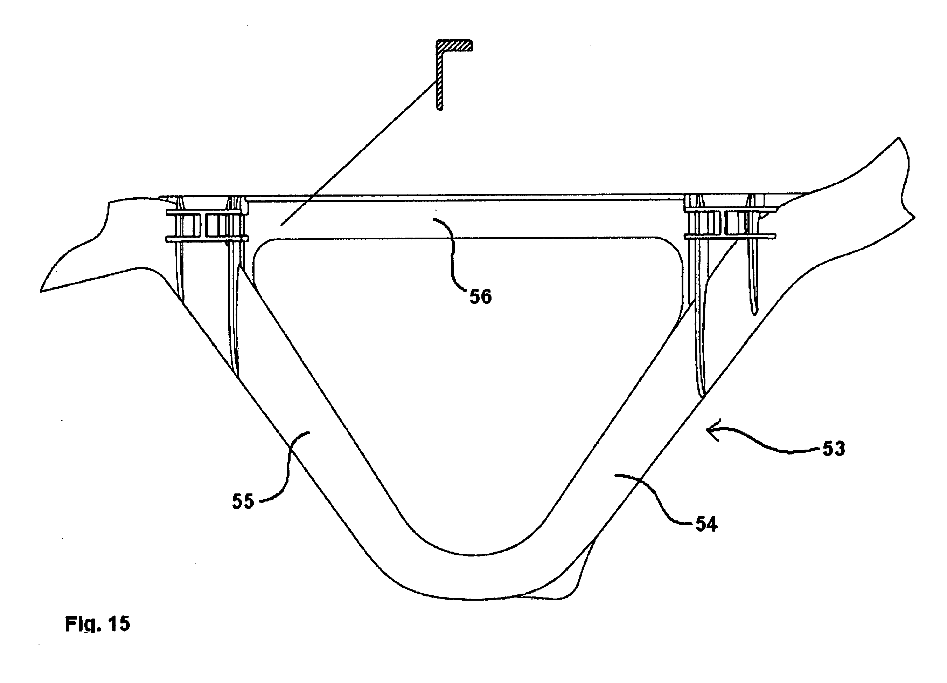

In den Figuren 13 bis 15 ist ein zweites Ausführungsbeispiel einer Schubkarre in Seitenansicht dargestellt. Die Schubkarre weist ein Gestell 50 und eine als Wanne ausgebildete Lastenaufnahmeeinrichtung 51 auf. Die Lastenaufnahme 51 ist an ihrer dem Gestell 50 zugewandten Seite mit Vorsprüngen 52 ausgestattet. Das Gestell 50 weist eine V-förmige Stütze 53 mit zwei Schenkeln 54 und 55 auf, die zusammen mit einem Träger 56 ein Dreieck aufspannen. Der Träger 56 ist im Querschnitt L-förmig. Der der Lastenaufnahmeeinrichtung 51 zugewandte Abschnitt des Trägers 56 weist in der Zeichnung nicht erkennbare Öffnungen auf, in die die Vorsprünge 52 der Lastenaufnahme 51 eingreifen. Dieses Eingreifen der Lastenaufnahmeeinrichtung 51 in das Gestell 50 sorgt für eine Stabilisierung der Schubkarre durch Torsionsaufnahme.

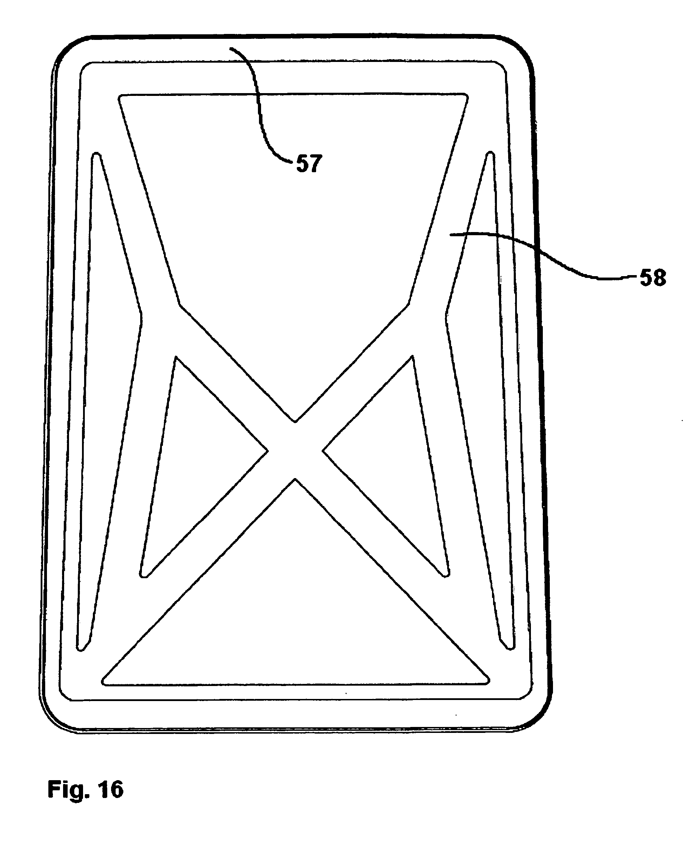

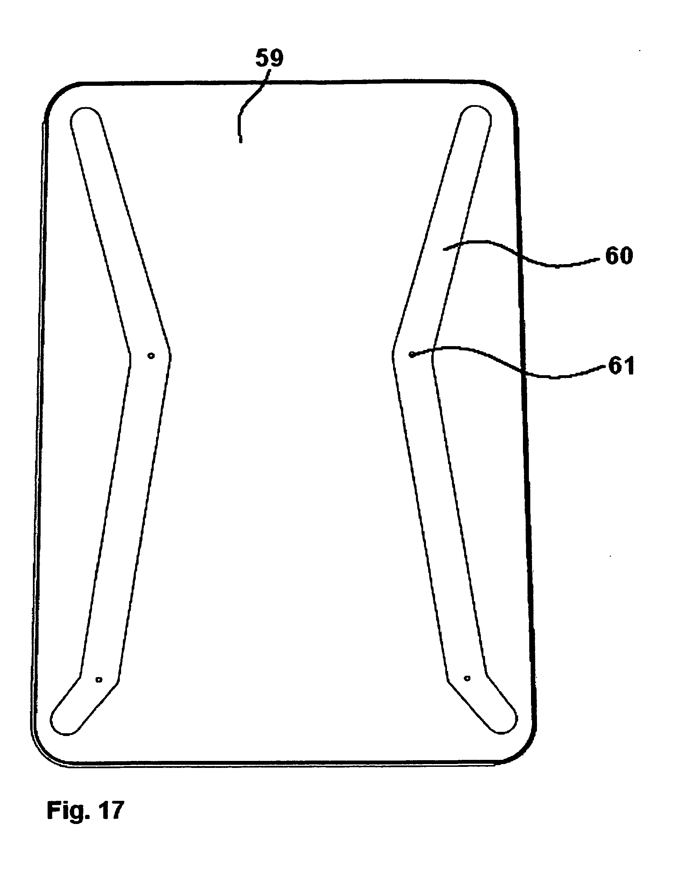

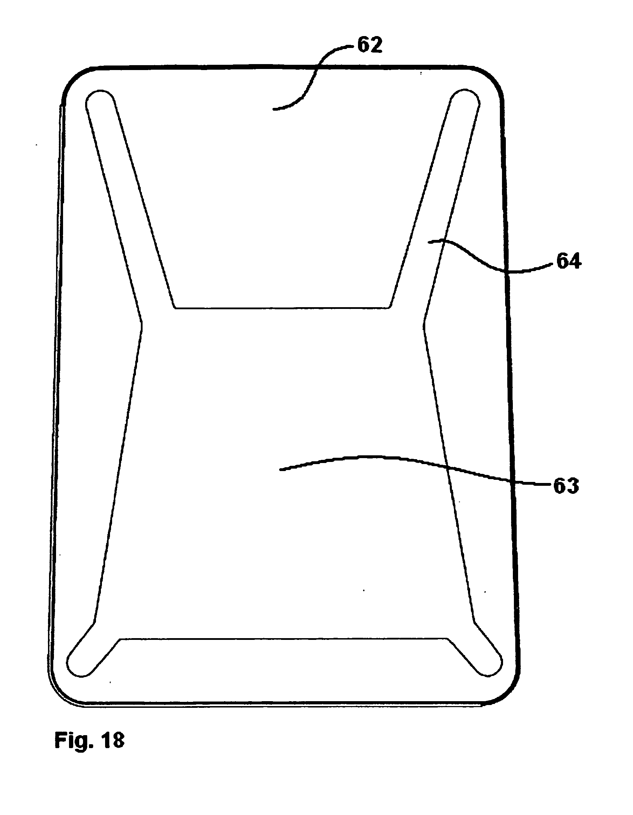

In den Figuren 16, 17 und 18 sind verschiedene als Wannen ausgebildete Lastenaufnahmeeinrichtungen in einer Ansicht von unten dargestellt. Die in der Darstellung erkennbare Unterseite der Lastenaufnahmeeinrichtungen ist in dem an einem Gestell angeordneten Zustand dem Gestell zugewandt. Alle drei in den Figuren 16, 17 und 18 gezeigten Lastenaufnahmeeinrichtungen weisen an ihrer Unterseite Verstärkungselemente auf, die für eine Versteifung der Lastenaufnahmeeinrichtung sorgen. Die Verstärkungselemente sind in den Boden der Lastenaufnahmeeinrichtung eingebettet. Sie bilden eine an der Unterseite der Lastenaufnahmeeinrichtung erkennbare Struktur. Es handelt sich hierbei um eine zusätzliche Materialanhäufung oder um weitere Komponenten, die bei der Herstellung der Lastenaufnahmeeinrichtung in die Kunststoffschmelze eingebettet werden. Mit dem gleichen Verlauf wir die Verstärkungselemente können auch als Hohlkanäle ausgebildete Versteifungselemente an der Lastenaufnahmeeinrichtung angeordnet sein. Bei der in Figur 16 dargestellten Lastenaufnahmeeinrichtung 57 verlaufen die Verstärkungselemente 58 parallel zu den Kanten der Lastenaufnahmeeinrichtung und kreuzen sich an dem Boden. Bei der in Figur 17 dargestellten Lastenaufnahmeeinrichtung 59 verlaufen die Verstärkungselemente 60 zumindest teilweise parallel zu den Kanten der Lastenaufnahmeeinrichtung. Sie kreuzen sich jedoch nicht. An den Ausnehmungen 61 wird die Lastenaufnahmeeinrichtung 59 mit einem in Figur 17 nicht dargestellten Gestell verbunden. Bei der in Figur 18 dargestellten Lastenaufnahmeeinrichtung 62 sind ein flächiges Verstärkungselement 63 und vier längliche Verstärkungselemente 64 parallel zu den Kanten der Lastenaufnahmeeinrichtung vorgesehen.

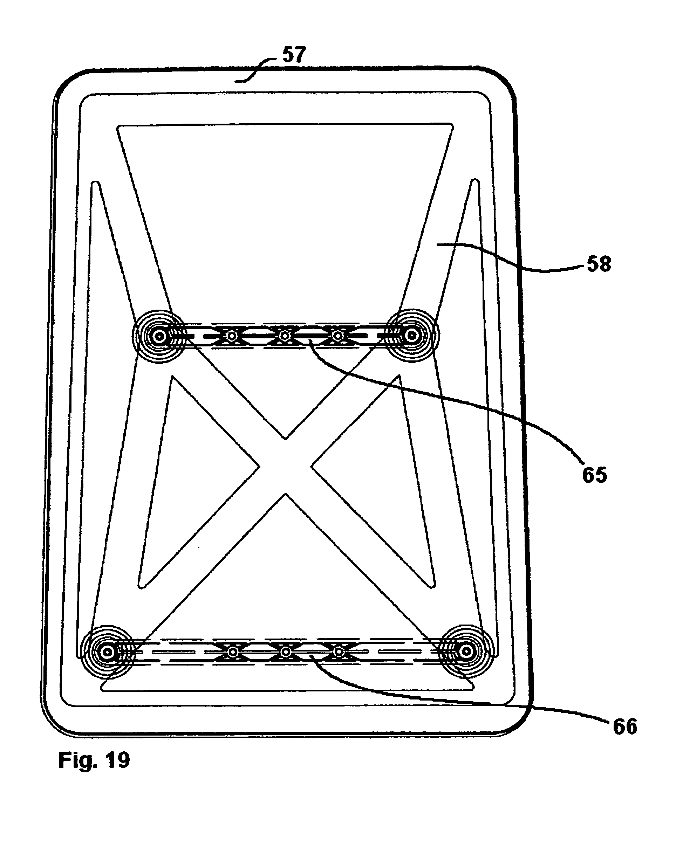

In Figur 19 ist die Lastenaufnahmeeinrichtung 57 mit zusätzlichen als Profile ausgebildeten Verstärkungselementen 65 und 66 ausgestattet. Diese Verstärkungselemente 65, 66 sind lose. Sie werden bevorzugt mit der Schubkarre beim Anordnen der Lastenaufnahmeeinrichtung 57 an einem Gestell verbunden. Hierzu weisen die Verstärkungselemente 65, 66 Ausnehmungen 67 auf, die mit Ausnehmungen der Lastenaufnahmeeinrichtung zur Deckung gebracht werden. Über diese Ausnehmung wird die Lastenaufnahmeeinrichtung mit einem Gestell verbunden.

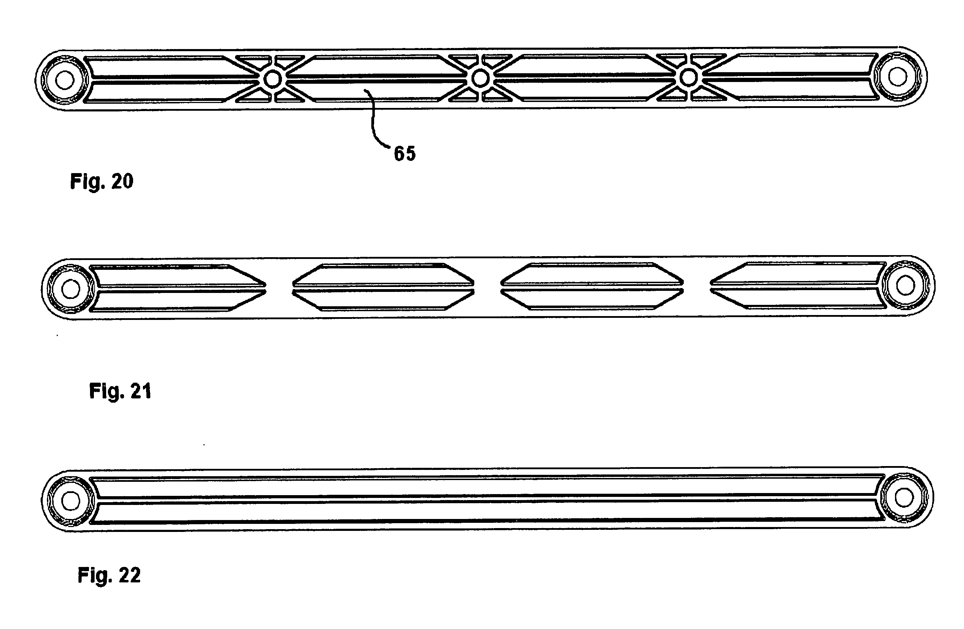

In den Figuren 20, 21, 22 sind verschiedene Profile dargestellt, die an der Unterseite einer Lastenaufnahmeeinrichtung angeordnet werden. Das Profil in Figur 20 entspricht dem Verstärkungselement 65 in Figur 19. Die in den Figuren 21 und 22 dargestellten Profile weisen eine andere Struktur auf.

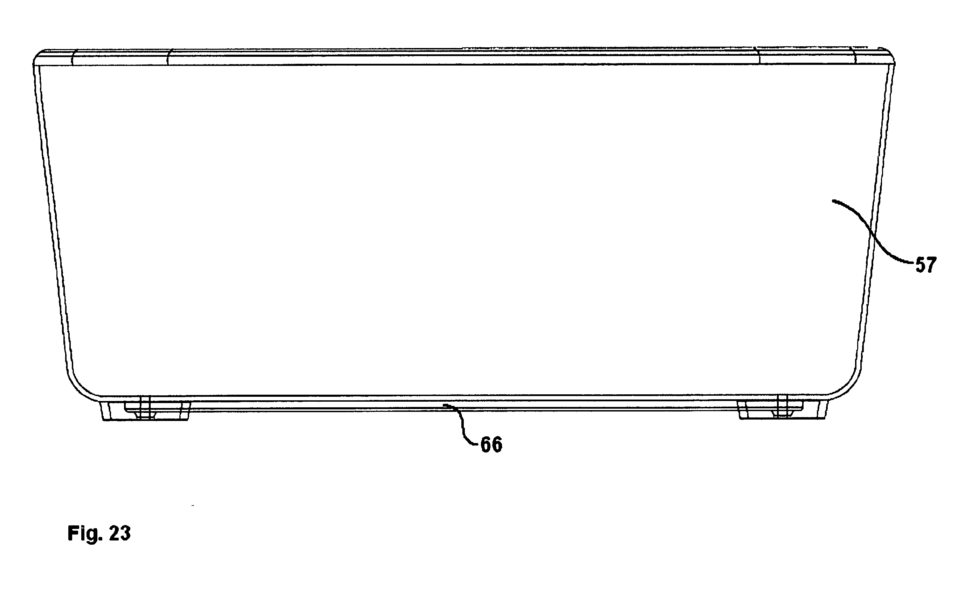

Figur 23 zeigt die Lastenaufnahmeeinrichtung 57 mit dem Verstärkungselement 66 in einer Ansicht von vorne.

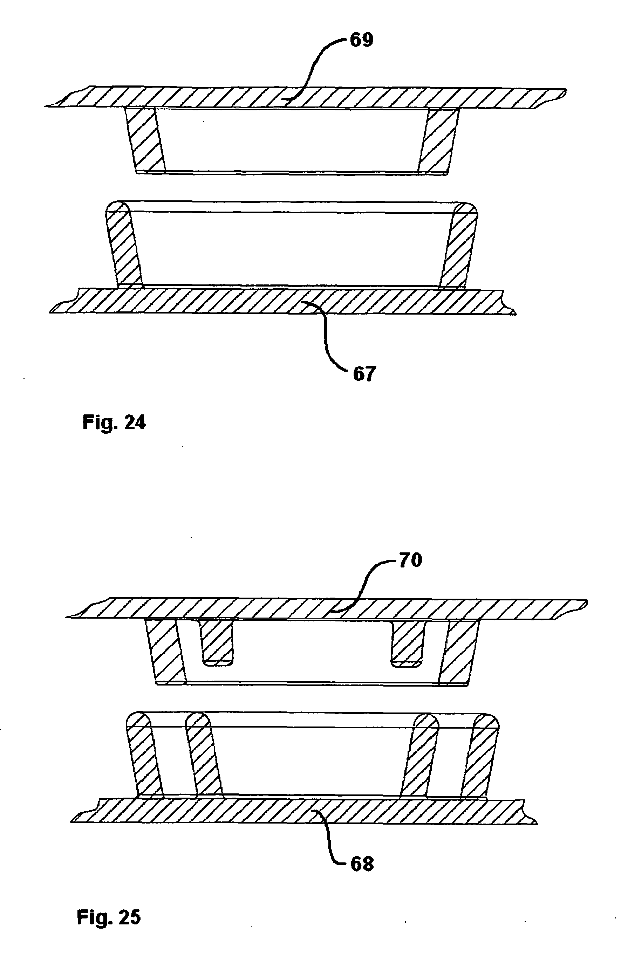

In den Figuren 24 und 25 sind verschiedene Profilierungen eines Gestells 67, 68 und einer Lastenaufnahmeeinrichtung 69, 70 dargestellt, die ineinander greifen und für ein Lager mit Gegenlager sorgen. Diese Lagerung der Lastenaufnahmeeinrichtung an dem Gestell sorgt für eine Versteifung, Verstärkung und Stabilisierung der Schubkarre.

### Bezugszahlen

- 1: Gestell
- 2: Lastenaufnahmeeinrichtung
- 3: Hohlkörper
- 4: Rad
- 5: Griffstange
- 6: Griff
- 7: Stütze
- 8: Radaufhängung
- 9: Abrollbügel
- 10: Position der festen Verbindung zwischen Gestell und Lastenaufnahmeeinrichtung
- 11: Position der festen Verbindung zwischen Gestell und Lastenaufnahmeeinrichtung
- 12: Position der festen Verbindung zwischen Gestell und Lastenaufnahmeeinrichtung
- 13: Schenkel der Stütze
- 14: Schenkel der Stütze
- 15: Träger der Stütze
- 16: Querschnitt der Griffstange an einer ersten Position
- 17: Querschnitt der Griffstange an einer zweiten Position
- 18: Querschnitt der Griffstange an einer dritten Position
- 19: Querschnitt des Trägers
- 20: Krümmung der Stütze
- 21: Grat
- 22: Krümmung des Abrollbügels
- 23: Verstärkung der Krümmung des Abrollbügels
- 24: Platte
- 25: Schraube
- 26: Rippe
- 27: erste Griffmulde
- 28: zweite Griffmulde
- 29: Untergrund
- 30: Aufnahme für Achse des Rades
- 31: Verstärkungselement
- 32: Kontur
- 33: hintere Verbindungseinrichtung
- 34: mittlere Verbindungseinrichtung
- 35: Verbindungselement
- 36: Verbindungselement
- 37: Erhöhung der Verbindungseinrichtung
- 38: Vertiefung der Verbindungseinrichtung
- 39: Erhöhung der Lastenaufnahmeeinrichtung
- 40: Vertiefung der Lastenaufnahmeeinrichtung
- 41: Öffnung
- 42: vordere Verbindungseinrichtung
- 43: Auflagefläche
- 44: Auflagefläche
- 45: Auflagefläche
- 46: Bohrung
- 47: Bohrung
- 48: Bohrung
- 49:
- 50: Gestell
- 51: Lastenaufnahmeeinrichtung
- 52: Vorsprung
- 53: Stütze
- 54: Schenkel
- 55: Schenkel
- 56: Träger
- 57: Lastenaufnahmeeinrichtung
- 58: Verstärkungselement
- 59: Lastenaufnahmeeinrichtung
- 60: Verstärkungselement
- 61: Ausnehmung
- 62: Lastenaufnahmeeinrichtung
- 63: Verstärkungselement
- 64: Verstärkungselement
- 65: Verstärkungselement
- 66: Verstärkungselement
- 67: Gestell
- 68: Gestell
- 69: Lastenaufnahmeeinrichtung
- 70: Lastenaufnahmeeinrichtung

## Patentansprüche

1. Schubkarre
mit einem aus mindestens einem Hohlkörper (3) geformten Gestell (1, 50), mit mindestens einem an dem Gestell (1, 50) drehbar angeordneten Rad, mit mindestens zwei Griffstangen (5) und an den Griffstangen (5) angeordneten Griffen (6) des Gestells (1, 50),
mit mindestens zwei Stützen (7, 53) des Gestells (1, 50), auf welchen die Schubkarre in der Ruhestellung aufgestützt ist,
mit einer an dem Gestell (1, 50) angeordneten, als Lastaufnahme ausgebildeten Lastenaufnahmeeinrichtung (2, 51, 57, 58, 59),
mit in verschiedenen Abschnitten des Gestells (1, 50) unterschiedlichen Querschnitten des Hohlkörpers (3),
mit einer von einer Kreisform abweichenden ovalen äußeren Form des Hohlkörpers (3) im Querschnitt in mindestens einem geradlinig verlaufenden Abschnitt (5) des Gestells (1, 50), wobei
der Hohlkörper (3) des Gestells (1, 50) in mindestens einem Abschnitt (7, 9) eine Krümmung (20, 22) aufweist,
**dadurch gekennzeichnet, dass** die Wandstärke des Hohlkörpers in dem bezüglich der Krümmung (20, 22) nach innen gerichteten Bereich kleiner ist als in dem nach außen gerichteten Bereich.

2. Schubkarre nach Anspruch 1, **dadurch gekennzeichnet, dass** die ovale Form in vertikaler Richtung in mindestens einem Abschnitt (5) eine größere Ausdehnung aufweist als in horizontaler Richtung.

3. Schubkarre nach Anspruch 1 oder 2, **dadurch gekennzeichnet, dass** die Wandstärken des Hohlkörpers (3) in verschiedenen geradlinig verlaufenden Abschnitten des Gestells (1, 50) unterschiedlich sind.

4. Schubkarre nach einem der vorhergehenden Ansprüche, **dadurch gekennzeichnet, dass** der Hohlkörper (3) des Gestells (1, 50) in dem Abschnitt der Stützen (7, 53) eine Krümmung (20) aufweist, und dass der Hohlkörper (3) an der bezüglich der Krümmung nach außen gerichteten und in der Ruhestellung der Schubkarre nach unten weisenden Außenseite mehrere Rippen (26) aufweist, die über die die Rippen (26) umgebende Oberfläche überstehen.

5. Schubkarre nach einem der vorhergehenden Ansprüche, **dadurch gekennzeichnet, dass** das Gestell (1, 50) zwei baugleiche Hohlkörper (3) aufweist mit jeweils einer Griffstange (5) mit Griff (6), einer Stütze (7, 53) und einer Radaufhängung (8), an welcher das Rad (4) drehbar angeordnet ist.

6. Schubkarre nach Anspruch 5, **dadurch gekennzeichnet, dass** jeder der beiden baugleichen Hohlkörper (3) an dem der Griffstange (5) abgewandten Ende eine vordere Verbindungseinrichtung (42) aufweist, an welcher die Lastenaufnahmeeinrichtung (2) mit dem Gestell (1) verbunden ist, und dass jeder der beiden Hohlkörper (3) zwischen der Radaufhängung (8) und der vorderen Verbindungseinrichtung (42) einen als Abrollbügel (9) ausgebildeten Abschnitt aufweist.

7. Schubkarre nach Anspruch 5 oder 6, **dadurch gekennzeichnet, dass** jeder der beiden baugleichen Hohlkörper (3) eine hintere Verbindungseinrichtung (33) an der Stütze (7, 53) oder zwischen der Griffstange (5) und der Stütze (7, 53) aufweist, an welcher die Lastenaufnahmeeinrichtung (2, 51) mit dem Gestell (1, 50) verbunden ist.

8. Schubkarre nach Anspruch 6 oder 7, **dadurch gekennzeichnet, dass** jeder der beiden baugleichen Hohlkörper (3) an der Stütze (7, 53) oder zwischen der Stütze (7, 53) und der Radaufhängung eine mittlere Verbindungseinrichtung (34) aufweist, an welcher die Lastenaufnahmeeinrichtung (2, 51) mit dem Gestell (1, 50) verbunden ist.

9. Schubkarre nach Anspruch 6, 7 oder 8, **dadurch gekennzeichnet, dass** die vordere Verbindungseinrichtung (42) und/ oder die mittlere Verbindungseinrichtung (34) und/ oder die hintere Verbindungsrichtung (33) als Abschnitt des Hohlkörpers (3) ausgebildet ist, und dass in diesem Abschnitt der Hohlkörper (3) eine gegenüber den übrigen Abschnitten des Hohlkörpers (3) größere Auflagefläche (35, 36, 43, 44, 45) für die Lastenaufnahmeeinrichtung (2) aufweist.

10. Schubkarre nach Anspruch 9, **dadurch gekennzeichnet, dass** die vordere Verbindungseinrichtung (42) und/ oder die mittlere Verbindungseinrichtung (34) und/ oder die hintere Verbindungseinrichtung (33, 34) an der der Lastenaufnahmeeinrichtung (2) zugewandten Seite erste Erhöhungen (37) und/ oder erste Vertiefungen (38) aufweist, und dass die Lastenaufnahmeeinrichtung (2) in dem der vorderen Verbindungseinrichtung (42) und/ oder der mittleren Verbindungseinrichtung (34) und/ oder der hinteren Verbindungseinrichtung (33) zugewandten Bereich zweite Erhöhungen (39) und/ oder zweite Vertiefungen (40) aufweist, welche in die ersten Erhöhungen (37) und/ oder ersten Vertiefungen (38) der Verbindungseinrichtung (33, 34) eingreifen.

11. Schubkarre nach Anspruch 10, **dadurch gekennzeichnet, dass** die ersten Erhöhungen (37) und/ oder zweiten Erhöhungen (37, 39) und/ oder die ersten Vertiefungen (38) und/ oder die zweiten Vertiefungen (38, 40) konisch sind.

12. Schubkarre nach einem der vorhergehenden Ansprüche, **dadurch gekennzeichnet, dass** die Stützen (7, 53) als V-förmige Abschnitte des mindestens einen Hohlkörpers (3) ausgebildet sind, und dass die beiden Schenkel (13, 14, 54, 55) jedes V-förmigen Abschnitts durch einen zusammen mit den Schenkeln (13, 14, 54, 55) ein Dreieck aufspannenden Träger (15, 56) miteinander verbunden sind.

13. Schubkarre nach einem der vorhergehenden Ansprüche, **dadurch gekennzeichnet, dass** die Radaufhängung (8) als Abschnitt des mindestens einen Hohlkörpers (3) ausgebildet ist, dass der Querschnitt des Abschnitts der Radaufhängung (8) größer ist als die Querschnitte der benachbarten Abschnitte, dass der Abschnitt der Radaufhängung (8) eine Aufnahme für eine feststehende oder drehbare Achse des Rades (4) aufweist.

14. Schubkarre nach Anspruch 13, **dadurch gekennzeichnet, dass** der Abschnitt der Radaufhängung (8) Verstärkungselemente (31) aufweist.

15. Schubkarre nach einem der vorhergehenden Ansprüche, **dadurch gekennzeichnet, dass** die Griffe (6) als Abschnitte des mindestens einen Hohlkörpers (3) im Bereich der Griffstangen (5) ausgebildet sind, dass die Griffe (6) mit einer Griffmulde (27) für den Daumen und/ oder mit einer Griffmulde (28) für einen weiteren Finger ausgebildet sind.

16. Schubkarre nach einem der vorhergehenden Ansprüche, **dadurch gekennzeichnet, dass** die Lastenaufnahmeeinrichtung (2) mindestens einen als Versteifungselement ausgebildeten länglichen Hohlraum aufweist.

## Claims

1. Wheelbarrow
with a frame (1, 50) formed from at least one hollow body (3),
with at least one pivot-mounted wheel on the frame (1, 50),
with at least two handle bars (5) with grips (6) located on the handle bars (5) of the frame (1, 50),
with at least two supports (7, 53) for the frame (1, 50) on which the wheelbarrow is supported in the rest position,
with a load-carrying facility (2, 51, 57, 58, 59) of load-carrying shape located on the frame (1, 50),
with a differing cross-section of the hollow body (3) in various sections of the frame (1, 50),
with an oval external shape of the hollow body (3) departing from a circular shape for the cross-section of at least one straight section (5) of the frame (1,50),
with the hollow body (3) of the frame (1, 50) exhibiting a curvature (20, 22) in at least one section (7, 9),
**characterised in that**
the wall thickness of the hollow body in the inward-facing part of the curvature (20, 22) being smaller than in the outward-facing part.

2. Wheelbarrow according to claim 1, **characterised in that** the oval shape exhibits greater elongation in the vertical direction than in the horizontal direction in at least one section (5).

3. Wheelbarrow according to claim 1 or 2, **characterised in that** the wall thicknesses of the hollow body (3) differ in various straight sections of the frame (1, 50).

4. Wheelbarrow according to one of the previous claims, **characterised in that** the hollow body (3) of the frame (1, 50) exhibits a curvature (20) in the section of the supports (7, 53) and that the hollow body (3) on the outward-facing outer side of the curvature and downward-facing outer side in the rest position of the wheelbarrow exhibits several ribs (26), which protrude above the surface surrounding the ribs (26).

5. Wheelbarrow according to one of the previous claims, **characterised in that** the frame (1, 50) exhibits two identical hollow bodies (3) each with a handle bar (5) with grip (6), a support (7, 53) and a wheel mount (8) on which the wheel (4) is pivot-mounted.

6. Wheelbarrow according to claim 5, **characterised in that** at the opposite end to the handle bar (5) each of the two identical hollow bodies (3) exhibits a front connecting device (42) at which the load-carrying facility (2) is connected to the frame (1), and that each of the two hollow bodies (3) exhibits a section shaped as a roll-off bar (9) between the wheel mount (8) and the front connecting device (42).

7. Wheelbarrow according to claim 5 or 6, **characterised in that** each of the two identical hollow sections (3) exhibits a rear connecting device (33) on a support (7, 53) or between the handle bar (5) and the support (7, 53), at which the load-carrying facility (2, 51) is connected to the frame (1, 50).

8. Wheelbarrow according to claim 6 or 7, **characterised in that** each of the two identical hollow sections (3) exhibits a centre connecting device (34) on the support (7, 53) or between the support (7, 53) and the wheel mount, at which the load-carrying facility (2, 51) is connected to the frame (1,50).

9. Wheelbarrow according to claim 6, 7 or 8, **characterised in that** the front connecting device (42) and/or the middle connecting device (34) and/or the rear connecting device (33) take the form of a section of the hollow body (3), and that in this section the hollow body (3) exhibits a larger support surface (35, 36, 43, 44, 45) for the load-carrying facility (2) than the other sections of the hollow body (3).

10. Wheelbarrow according to claim 9, **characterised in that** the front connecting device (42) and/or the middle connecting device (34) and/or the rear connecting device (33) exhibit first elevations (37) and/or first recesses (38) on the side facing the load-carrying facility (2), and that the load-carrying facility (2) in the section facing the front connecting device (42) and/or the middle connecting device (34) and/or the rear connecting device (33) exhibits second elevations (39) and/or second recesses (40) that engage in the first elevations (37) and/or first recesses (38) of the connecting device (33, 34).

11. Wheelbarrow according to claim 10, **characterised in that** the first elevations (37) and/or second elevations (39) and/or the first recesses (38) and/or the second recesses (40) are conical.

12. Wheelbarrow according to one of the previous claims, **characterised in that** the supports (7, 53) take the form of V-shaped sections of the at least one hollow body (3), and that the two shanks (13, 14, 54, 55) of each V-shaped section are connected to each other by a member (15, 56) forming a triangle together with the shanks (13, 14, 54, 55).

13. Wheelbarrow according to one of the previous claims, **characterised in that** the wheel mount (8) takes the form of a section of the at least one hollow body (3), that the cross-section of the section for the wheel mount (8) is larger than the cross-sections of the adjacent sections, that the section for the wheel mount (8) exhibits a mount for a fixed or pivoting axle for the wheel (4).

14. Wheelbarrow according to claim 13, **characterised in that** the section for the wheel mount (8) exhibits reinforcing elements (31).

15. Wheelbarrow according to one of the previous claims, **characterised in that** the grips (6) take the form of sections of the at least one hollow body (3) in the area of the handle bars (5), that the grips (6) feature a grip recess (27) for the thumb and/or a grip recess (28) for a further finger.

16. Wheelbarrow according to one of the previous claims, **characterised in that** the load-carrying facility (2) exhibits at least one elongate cavity in the form of a stiffening element.

## Revendications

1. Brouette
avec un châssis (1, 50) formé à partir d'au moins un corps creux (3),
avec au moins une roue logée sur le châssis (1, 50) de manière à pouvoir tourner,
avec au moins deux brancards (5) et des poignées (6) disposées sur les brancards (5) du châssis (1, 50),
avec au moins deux pieds (7, 53) du châssis (1, 50) sur lesquels la brouette repose en position d'arrêt,
avec un bac (2, 51, 57, 58, 59) servant de porte-charge disposé sur le châssis (1, 50),
ledit corps creux (3) présentant des sections transversales différentes dans diverses parties du châssis (1, 50),
ledit corps creux (3) présentant dans au moins une partie rectiligne (5) du châssis (1, 50) une forme extérieure ovale en section transversale divergente d'une forme circulaire,
ledit corps creux (3) du châssis (1, 50) présentant une courbure (20, 22) dans au moins une partie (7, 9),
**caractérisée en ce que**
l'épaisseur de paroi du corps creux est, dans la zone orientée vers l'intérieur de la courbure (20, 22), plus faible que dans celle orientée vers l'extérieur.

2. Brouette selon la revendication 1, **caractérisée en ce que** ladite forme ovale présente dans au moins une partie (5) une élongation plus importante dans le sens vertical que dans le sens horizontal.

3. Brouette selon la revendication 1 ou 2, **caractérisée en ce que** les épaisseurs de paroi du corps creux (3) diffèrent dans diverses parties rectilignes du châssis (1, 50).

4. Brouette selon l'une quelconque des revendications précédentes, **caractérisée en ce que** le corps creux (3) du châssis (1, 50) présente une courbure (20) dans la partie des pieds (7, 53), et **en ce que** le corps creux (3) présente, sur la face extérieure orientée vers l'extérieur de la courbure et dirigée vers le bas en position d'arrêt de la brouette, plusieurs nervures (26) qui dépassent la surface environnante des nervures (26).

5. Brouette selon l'une quelconque des revendications précédentes, **caractérisée en ce que** le châssis (1, 50) présente deux corps creux (3) de fabrication identique dotés respectivement d'un brancard (5) avec une poignée (6), d'un pied (7, 53) et d'une suspension de roue (8) sur laquelle la roue (4) est logée de manière à pouvoir tourner.

6. Brouette selon la revendication 5, **caractérisée en ce que** chacun des deux corps creux (3) de fabrication identique présente, à l'extrémité opposée au brancard (5), un dispositif de liaison avant (42) au niveau duquel le bac (2) est relié au châssis (1), et **en ce que** chacun des deux corps creux (3) présente, entre la suspension de roue (8) et le dispositif de liaison avant (42), une partie formant un arceau de basculement (9).

7. Brouette selon la revendication 5 ou 6, **caractérisée en ce que** chacun des deux corps creux (3) de fabrication identique présente, au niveau du pied (7, 53) ou entre le brancard (5) et le pied (7, 53), un dispositif de liaison arrière (33) au niveau duquel le bac (2, 51) est relié au châssis (1, 50).

8. Brouette selon la revendication 6 ou 7, **caractérisée en ce que** chacun des deux corps creux (3) de fabrication identique présente, au niveau du pied (7, 53) ou entre le pied (7, 53) et la suspension de roue, un dispositif de liaison central (34) au niveau duquel le bac (2, 51) est relié au châssis (1, 50).

9. Brouette selon la revendication 6, 7 ou 8, **caractérisée en ce que** le dispositif de liaison avant (42) et/ou le dispositif de liaison central (34) et/ou le dispositif de liaison arrière (33) forme une partie du corps creux (3), et **en ce que** le corps creux (3) présente dans cette partie une surface d'appui (35, 36, 43, 44, 45) pour le bac (2) qui est plus importante par rapport aux autres parties du corps creux (3).

10. Brouette selon la revendication 9, **caractérisée en ce que** le dispositif de liaison avant (42) et/ou le dispositif de liaison central (34) et/ou le dispositif de liaison arrière (33) présente, sur le côté orienté vers le bac (2), des premières bosses (37) et/ou des premiers creux (38), et **en ce que** le bac (2) présente, dans la zone orientée vers le dispositif de liaison avant (42) et/ou le dispositif de liaison central (34) et/ou le dispositif de liaison arrière (33), des secondes bosses (39) et/ou des seconds creux (40) qui s'engrènent avec les premières bosses (37) et/ou avec les premiers creux (38) du dispositif de liaison (33, 34).

11. Brouette selon la revendication 10, **caractérisée en ce que** les premières bosses (37) et/ou les secondes bosses (39) et/ou les premiers creux (38) et/ou les seconds creux (40) sont de forme conique.

12. Brouette selon l'une quelconque des revendications précédentes, **caractérisée en ce que** les pieds (7, 53) sont des parties en V dudit au moins un corps creux (3), et **en ce que** les deux branches (13, 14, 54, 55) de chaque partie en V sont reliées l'une à l'autre par une console (15, 56) formant un triangle avec les branches (13, 14, 54, 55).

13. Brouette selon l'une quelconque des revendications précédentes, **caractérisée en ce que** la suspension de roue (8) est une partie dudit au moins un corps creux (3), **en ce que** la section transversale de la partie de la suspension de roue (8) est plus importante que les sections transversales des parties voisines, **en ce que** la partie de la suspension de roue (8) présente un logement pour un essieu fixe ou rotatif de la roue (4).

14. Brouette selon la revendication 13, **caractérisée en ce que** la partie de la suspension de roue (8) présente des éléments de renfort (31).

15. Brouette selon l'une quelconque des revendications précédentes, **caractérisée en ce que** les poignées (6) forment des parties dudit au moins un corps creux (3) dans la zone des brancards (5), **en ce que** les poignées (6) présentent un renfoncement (27) pour le pouce et/ou un renfoncement (28) pour un autre doigt.

16. Brouette selon l'une quelconque des revendications précédentes, **caractérisée en ce que** le bac (2) présente au moins une cavité longitudinale formant un élément de renfort.
